# EUROPEAN PATENT APPLICATION

(11) **EP 4 625 026 A1**
(43) Date of publication of application: **01.10.2025**
(21) Application number: 25153681.9
(22) Date of filing: 23.01.2025
(51) Int. Cl.: G02F 1/01, G02F 1/03, G02F 1/21, G02F 1/225

(54) **OPTICAL MODULATOR**

(30) Priority: 28.03.2024 JP 2024054506
(71) Applicant: Sumitomo Osaka Cement Co., Ltd., Tokyo, 105-8641 (JP); National Institute of Information and Communications Technology, Koganei-shi, Tokyo 184-8795 (JP)
(72) Inventor: KATAOKA, Yu, Tokyo, 105-8641 (JP); TAKANO, Shingo, Tokyo, 105-8641 (JP); YAMAGUCHI, Yuya, Tokyo, 184-8795 (JP); AKAHANE, Kouichi, Tokyo, 184-8795 (JP)
(74) Representative: Sonnenberg Harrison Partnerschaft mbB

(57) **Abstract**

An optical waveguide device in which an optical waveguide including at least one Mach-Zehnder type optical waveguide is formed on a substrate, and two branched waveguides 10 configuring the Mach-Zehnder type optical waveguide are each provided with two modulation electrodes (E1, E2) for applying a differential modulation signal, wherein each of the modulation electrodes includes a plurality of proximity electrodes (PE11 to PE22) disposed in a divided manner along the branched waveguide, a signal electrode (LE1, LE2) for propagating the modulation signal, and a bypass electrode (BE1, BE2) connecting the proximity electrodes and the signal electrode, and a capacitance adjustment mechanism (DE) for adjusting a phase velocity of the modulation signal propagating through the modulation electrode is provided on at least one of the two modulation electrodes (E1, E2).

## Description

This application claims priority of Japanese application JP 2024-054506 filed on 28 March 2024. The entire disclosure of JP 2024-054506 is hereby incorporated herein by reference.

### BACKGROUND OF THE INVENTION

### Field of the Invention

The present invention relates to an optical waveguide device, an optical modulation device using the same, and an optical transmission apparatus, particularly to an optical waveguide device in which an optical waveguide including at least one Mach-Zehnder type optical waveguide is formed on a substrate, and two modulation electrodes for applying a differential modulation signal are disposed on each of the two branched waveguides configuring the Mach-Zehnder type optical waveguide.

### Description of Related Art

In the field of optical communication and in the field of optical measurement, an optical waveguide device such as an optical modulator including an optical waveguide formed on a substrate has been widely used. In recent years, an optical modulator included in a transmitter built into an optical transmission/reception device is required to be miniaturized, to have low power consumption, and to have a broadband of a driving signal or a low drive voltage. In order to cope with miniaturization and the broadband of the driving signal, a thin plate having a thickness of several µm or less is used for the substrate on which the optical waveguide is formed. Further, in order to reduce the drive voltage, the optical waveguide device is driven by differential modulation signals.

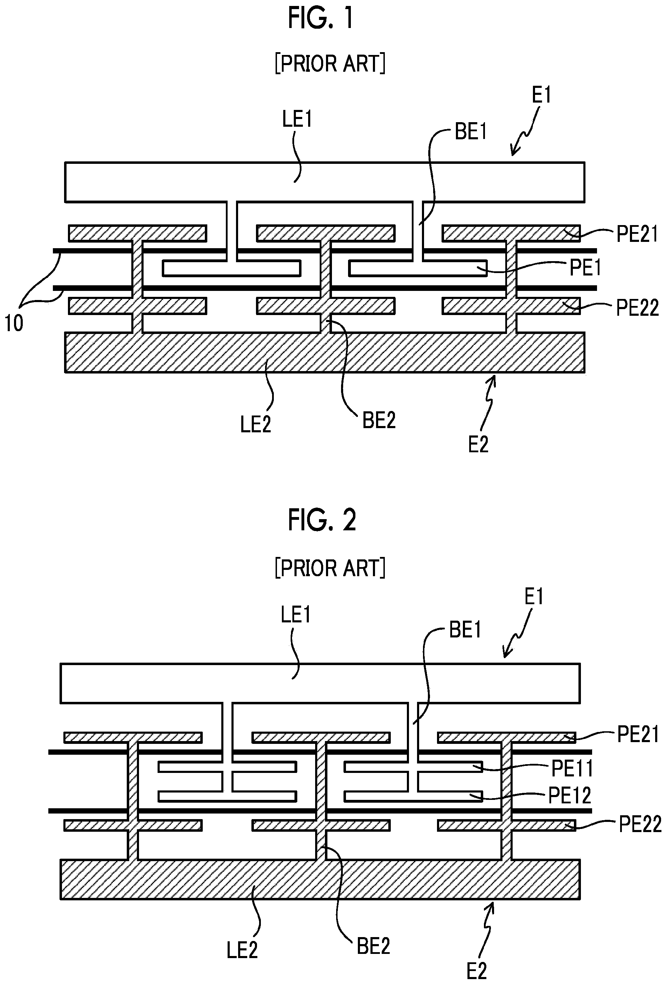

Chinese Laid-open Patent Publication No. CN115586663A discloses an optical waveguide device that uses such a thin plate and is driven by a differential modulation signal. FIGS. 1 and 2 are plan views showing a part of the optical waveguide device disclosed in Chinese Laid-open Patent Publication No. CN115586663A. In FIG. 1, the optical waveguide 10 is two branched waveguides configuring a Mach-Zehnder type optical waveguide, and each branched waveguide 10 is driven in a push-pull manner by the electrodes E1 and E2 to which a differential modulation signal is applied. The electrodes E1 and E2 are configured such that a plurality of "T"- or "H"-shaped fine electrodes (segment electrodes) are connected to strip-shaped signal electrodes LE1 and LE2 through which a modulation signal propagates.

In addition, as shown in FIG. 2, a configuration is also proposed in which "H"-shaped segment electrodes are connected to both signal electrodes LE1 and LE2. Each segment electrode is disposed close to the optical waveguide (branched waveguide) 10 and is composed of proximity electrodes (PE1 to PE22) for applying an electric field to the optical waveguide, and a bypass electrode (BE1 or BE2) that connects the proximity electrodes and the signal electrode (LE1 or LE2).

A differential modulation signal propagates to the electrodes E1 and E2. Therefore, it is necessary to always apply modulation signals with reverse phases to the proximity electrodes (for example, PE1 and PE21, or PE1 and PE22) in the same optical waveguide 10. However, since the segment electrodes connected to the electrodes E1 and E2 do not necessarily have the same shape, a phenomenon occurs in which the phases of the differential modulation signals propagating through the electrodes E1 and E2 gradually shift.

In FIG. 1, the shapes of the segment electrodes are different, being a "T" shape and an "H" shape, whereas in FIG. 2, each segment electrode has the same "H" shape, but the clearances between proximity electrodes (PE11 and PE12, PE21 and PE22) are different from each other, which results in a difference in the propagation velocity of the differential modulation signal and a phase shift in the modulation signal.

### Related art Document

### Patent Document

[Patent Document 1] Chinese Patent Publication CN115586663A

### SUMMARY OF THE INVENTION

An object to be solved by the present invention is to solve the above problem and to provide an optical waveguide device that suppresses the phase shift of a differential modulation signal propagating through the electrodes. Furthermore, an optical modulation device and an optical transmission apparatus using the optical waveguide device are provided.

In order to address the object, an optical waveguide device, an optical modulation device, and an optical transmission apparatus of the present invention have the following technical features.
(1) An optical waveguide device in which an optical waveguide including at least one Mach-Zehnder type optical waveguide is formed on a substrate, and two branched waveguides configuring the Mach-Zehnder type optical waveguide are each provided with two modulation electrodes for applying a differential modulation signal, in which each of the modulation electrodes includes a plurality of proximity electrodes disposed in a divided manner along the branched waveguide, a signal electrode for propagating the modulation signal, and a bypass electrode connecting the proximity electrodes and the signal electrode, and a capacitance adjustment mechanism for adjusting a phase velocity of the modulation signal propagating through the modulation electrode is provided on at least one of the two modulation electrodes.
(2) The optical waveguide device according to (1), in which the capacitance adjustment mechanism may be a dummy electrode that is formed on a part of the modulation electrode and does not generate an electric field to be applied to the branched waveguide.
(3) The optical waveguide device according to (2), in which the dummy electrode may be a first dummy electrode that extends from the proximity electrode to a side opposite to the bypass electrode.
(4) The optical waveguide device according to (2), in which the dummy electrode may be a second dummy electrode extending from the bypass electrode.
(5) The optical waveguide device according to (2), in which the dummy electrode may be a third dummy electrode extending from the signal electrode.
(6) The optical waveguide device according to (5), in which the third dummy electrode may include a plurality of fine electrodes disposed between the adjacent bypass electrodes.
(7) The optical waveguide device according to (1), in which the capacitance adjustment mechanism may be to change an electrode width of at least a part of the proximity electrode, the bypass electrode, or the signal electrode.
(8) The optical waveguide device according to (1), in which the capacitance adjustment mechanism may be to change an electrode thickness of at least a part of the bypass electrode or the signal electrode.
(9) The optical waveguide device according to any one of (1) to (8), in which a buffer layer may be formed on the substrate, the proximity electrode may be disposed between the substrate and the buffer layer, and a part of the signal electrode and the bypass electrode may be disposed on the buffer layer.
(10) The optical waveguide device according to any one of (1) to (9), in which a dummy optical waveguide that does not propagate a light wave may be disposed adjacent to the branched waveguide.
(11) The optical waveguide device according to any one of (1) to (10), in which a capacitor that blocks a DC component of the modulation signal may be formed in a part of the modulation electrode or in a part of a signal line electrically connected to the modulation electrode.
(12) An optical modulation device including: the optical waveguide device according to any one of (1) to (11) accommodated in a case; and an optical fiber through which a light wave is input into the optical waveguide or output from the optical waveguide.
(13) The optical modulation device according to (12), in which the optical waveguide device may include a modulation electrode for modulating the light wave propagating through the optical waveguide, and an electronic circuit that amplifies a modulation signal to be input to the modulation electrode of the optical waveguide device may be provided inside the case.
(14) An optical transmission apparatus including: the optical modulation device according to (11) or (12); and an electronic circuit that outputs a modulation signal causing the optical modulation device to perform a modulation operation.

According to the present invention, it is possible to provide an optical waveguide device in which an optical waveguide including at least one Mach-Zehnder type optical waveguide is formed on a substrate, and two branched waveguides configuring the Mach-Zehnder type optical waveguide are each provided with two modulation electrodes for applying a differential modulation signal, in which each of the modulation electrodes includes a plurality of proximity electrodes disposed in a divided manner along the branched waveguide, a signal electrode for propagating the modulation signal, and a bypass electrode connecting the proximity electrodes and the signal electrode, and a capacitance adjustment mechanism for adjusting a phase velocity of the modulation signal propagating through the modulation electrode is provided on at least one of the two modulation electrodes, whereby it is possible to suppress a phase shift of the differential modulation signal propagating through the electrode. In addition, the optical modulation device and the optical transmission apparatus having the same excellent characteristics can be provided using the optical waveguide device.

### BRIEF DESCRIPTION OF THE DRAWINGS

FIG. 1 is a plan view showing an example of an optical waveguide device disclosed in Chinese Laid-open Patent Publication No. CN115586663A.
FIG. 2 is a plan view showing another example of the optical waveguide device disclosed in Chinese Laid-open Patent Publication No. CN115586663A.
FIG. 3 is a plan view illustrating an example of an optical waveguide device using a segment electrode.
FIGS. 4A to 4C are views showing an example of cross-sectional views taken along dotted lines A to C in FIG. 3.
FIGS. 5A to 5C are views showing another example of the cross-sectional views taken along the dotted lines A to C in FIG. 3.
FIG. 6 is a plan view illustrating a first embodiment of the optical waveguide device according to the present invention.
FIG. 7 is a diagram illustrating an application example of the first embodiment of FIG. 6.
FIG. 8 is a diagram illustrating another application example of the first embodiment of FIG. 6.
FIG. 9 is a plan view illustrating a second embodiment of the optical waveguide device according to the present invention.
FIG. 10 is a plan view illustrating a third embodiment of the optical waveguide device according to the present invention.
FIG. 11 is a plan view illustrating a configuration that enhances the symmetry of two electrodes (E1 and E2) in the optical waveguide device according to the present invention.
FIG. 12 is a plan view illustrating an example in which a dummy optical waveguide is used in the optical waveguide device of the present invention.
FIG. 13 is a plan view illustrating an application example of the third embodiment of FIG. 10.
FIG. 14 is a plan view illustrating a fourth embodiment of the optical waveguide device according to the present invention.
FIGS. 15A to 15C are diagrams showing an example of cross-sectional views taken along dotted lines A to C in FIG. 14.
FIG. 16 is a plan view illustrating a fifth embodiment of the optical waveguide device according to the present invention.
FIG. 17 is a diagram showing an example of a cross-sectional view taken along a dotted line A in FIG. 16.
FIG. 18 is a diagram showing an optical transmission apparatus according to the present invention.
FIG. 19 is a diagram illustrating an example in which a capacitor is disposed on a part of a modulation electrode of the optical waveguide device.
FIG. 20 is a diagram illustrating an example in which a capacitor is disposed on a signal line connected to a modulation electrode of the optical waveguide device.

### DETAILED DESCRIPTION OF THE INVENTION

Hereinafter, the present invention will be described in detail using preferred examples.

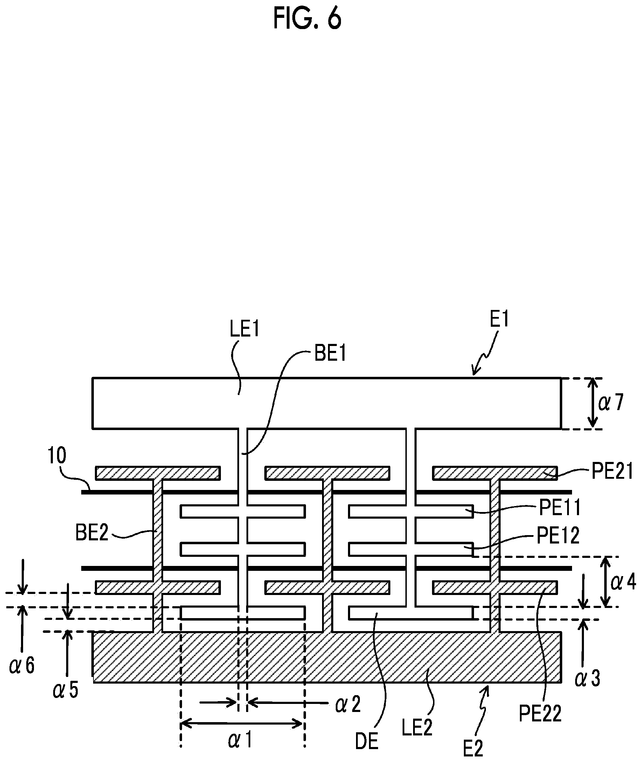

The present invention relates to, for example, as shown in FIG. 6, an optical waveguide device in which an optical waveguide including at least one Mach-Zehnder type optical waveguide is formed on a substrate, and two branched waveguides 10 configuring the Mach-Zehnder type optical waveguide are each provided with two modulation electrodes (E1, E2) for applying a differential modulation signal, wherein each of the modulation electrodes includes a plurality of proximity electrodes (PE11 to PE22) disposed in a divided manner along the branched waveguide, a signal electrode (LE1, LE2) for propagating the modulation signal, and a bypass electrode (BE1, BE2) connecting the proximity electrodes and the signal electrode, and a capacitance adjustment mechanism (DE) for adjusting a phase velocity of the modulation signal propagating through the modulation electrode is provided on at least one of the two modulation electrodes (E1, E2).

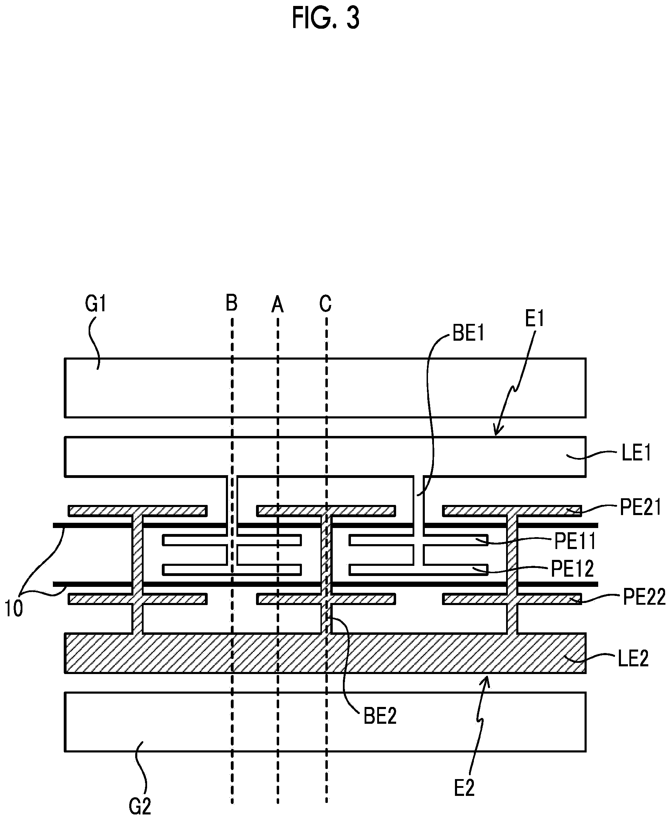

First, a structure of an optical waveguide device using segment electrodes will be described. FIG. 3 is a plan view showing a part of the optical waveguide device using the segment electrode of FIG. 2. Two modulation electrodes (E1, E2) are disposed for two branched waveguides 10 of a Mach-Zehnder type optical waveguide. Each modulation electrode is disposed with the proximity electrodes (PE11 to PE22) such that an electric field based on the modulation signal can always be applied to the two branched waveguides. In addition, ground electrodes (G1, G2) are disposed to sandwich the two modulation electrodes (E1, E2).

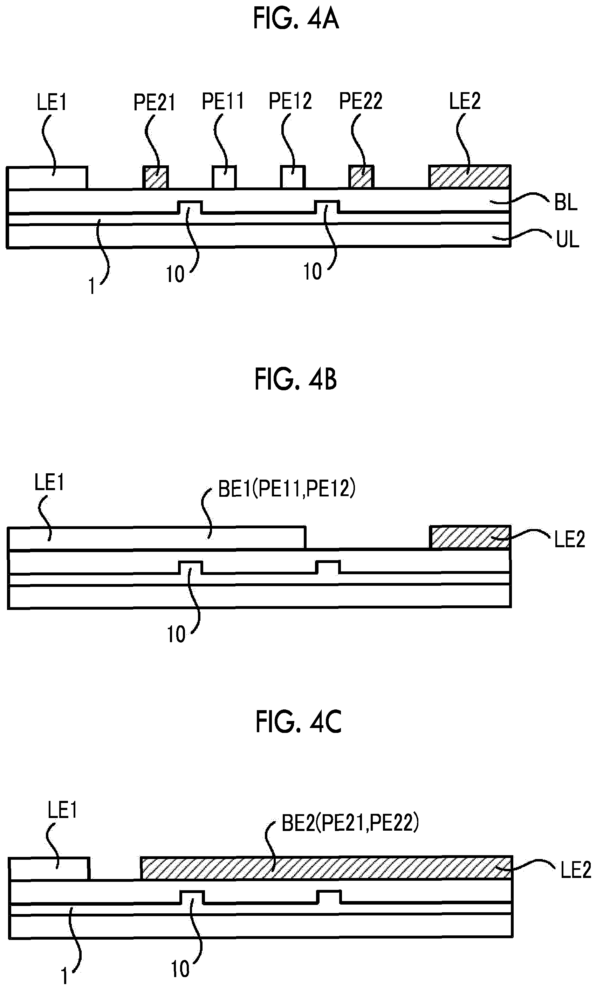

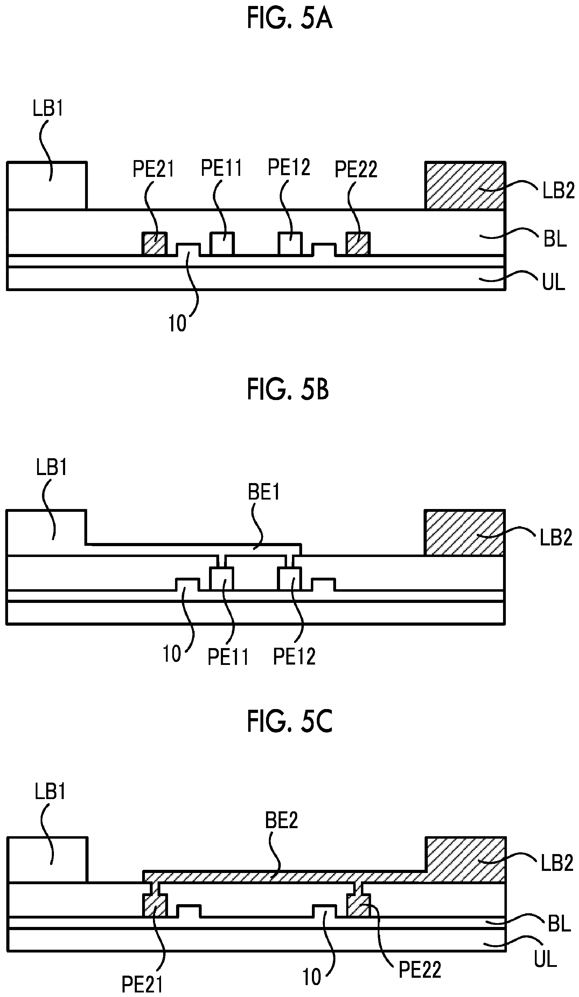

FIGS. 4A to 5C show a part of the cross-sections taken along the dotted lines A to C in FIG. 3. In FIGS. 4A to 5C, a lower layer UL, made of a material with a lower refractive index than the optical waveguide substrate 1, is provided on the lower surface side of the optical waveguide substrate 1, which is equipped with the rib-type optical waveguide 10. In a case where the lower layer UL has a holding substrate on the lower side, the lower layer UL may be referred to as an intermediate layer. In addition, a buffer layer BL made of a material having a lower refractive index than the optical waveguide substrate 1 is disposed on the upper surface side of the optical waveguide substrate 1.

In FIGS. 4A to 4C, the modulation electrodes (E1, E2) are disposed on the upper surface side of the buffer layer BL, and all the signal electrodes (LE1, LE2), bypass electrodes (BE1, BE2), and proximity electrodes (PE11 to PE22) configuring the modulation electrodes are located on the upper side of the buffer layer BL.

On the other hand, in FIGS. 5A to 5C, the proximity electrodes (PE11 to PE22) are disposed between the optical waveguide substrate 1 and the buffer layer BL and the electrodes are disposed closer to the optical waveguide 10, whereby efficiently applying the electric field to the optical waveguide. However, the signal electrodes (LE1, LE2) are disposed on the upper surface side of the buffer layer BL, and the bypass electrodes (BE1, BE2) penetrate the buffer layer BL to connect the signal electrodes and the proximity electrodes. Since the signal electrodes are disposed on the upper side of the optical waveguide substrate, and a part of the signal electrode may intersect with the optical waveguide 10, the signal electrodes are spaced apart from each other via the buffer layer BL in order to suppress absorption or scattering of the light wave propagating through the optical waveguide.

In the optical waveguide device of the present invention, unless otherwise specified, the arrangement of FIGS. 4A to 4C or FIGS. 5A to 5C can be selectively applied. The configuration of FIGS. 5A to 5C is more efficient in terms of applying the electric field as described above, but the manufacturing process is more complicated, so each configuration is appropriately selected while taking these factors into consideration.

As the optical waveguide substrate 1 used in the optical waveguide device of the present invention, a substrate having an electro-optic effect can be used. Specifically, single crystal materials such as lithium niobate (LN), lithium tantalate (LT), and lead lanthanum zirconate titanate (PLZT), or materials obtained by doping these substrate materials with MgO or the like can be used. In addition, these materials can be formed into films using a vapor-phase growth method such as a sputtering method, a vapor deposition method, or a CVD method. In addition, a substrate obtained by bonding the substrate having the electro-optic effect to another substrate and then processing the substrate having an electro-optic effect into a thin film can also be used. Furthermore, a semiconductor substrate, a substrate of an organic material such as EO polymer, and the like can also be used.

The optical waveguide 10 may be an optical waveguide in which a high refractive index material such as Ti is thermally diffused into the optical waveguide substrate 1, an optical waveguide formed by the proton exchange method, or even a rib-type optical waveguide 10 in which a portion of the substrate corresponding to the optical waveguide is formed in a convex shape as shown in FIGS. 4A to 4C or FIGS. 5A to 5C, by etching the substrate 1 other than the optical waveguide or by forming grooves on both sides of the optical waveguide. Furthermore, a refractive index can be further increased by diffusing Ti or the like on a surface of the substrate using a thermal diffusion method, a proton exchange method, or the like in accordance with the rib optical waveguide. The rib-type optical waveguide is an optical waveguide having a fine structure with a width or height of approximately 1 µm or less to increase confinement of light.

A thickness (maximum thickness) of the optical waveguide substrate 1 on which the optical waveguide 10 is formed is set to 10 µm or less, more preferably 5 µm or less, still more preferably 1 µm or less for velocity matching between the microwave of the modulation signal and the light wave. In addition, the height (height of the portion protruding from the slab waveguide) of the rib-type optical waveguide 10 is set to 80% or less of the maximum thickness of the optical waveguide substrate, and specifically, is set to 4 µm or less, more preferably 3 µm or less, and still more preferably 0.8 µm or less or 0.4 µm or less.

A lower layer is provided on the lower surface side of the optical waveguide substrate 1 on which the optical waveguide is formed. In order to increase the mechanical strength of the optical waveguide device, a holding substrate may be bonded to the lower side of the optical waveguide substrate 1. The optical waveguide substrate 1 and the holding substrate are bonded and fixed to each other by direct bonding or by an adhesive layer such as a resin. The holding substrate to be directly bonded preferably has, but is not limited to, a lower refractive index than the optical waveguide or than the substrate on which the optical waveguide is formed. In the case of direct bonding, an intermediate layer such as a metal oxide or a metal may be included in the bonding portion. In addition, as the holding substrate, a substrate including an oxide layer such as a SiO₂-based or Al₂O₃-based low dielectric constant substrate such as, for example, glass, quartz, fused quartz, synthetic quartz, eagle glass, alkali glass, non-alkali glass, lead glass, Pyrex glass, soda glass, sapphire, or alumina, which is a material having a thermal expansion coefficient close to the optical waveguide substrate 1, is suitably used. Furthermore, the same LN substrate as the optical waveguide substrate 1, or a composite substrate obtained by forming a silicon oxide layer on a silicon substrate and a composite substrate obtained by forming a silicon oxide layer on an LN substrate, which are abbreviated to SOI and LNOI, can also be used. In a case where the refractive index of the holding substrate is higher than the refractive index of the optical waveguide substrate 1, a layer (intermediate layer) having a lower refractive index than the refractive index of the optical waveguide substrate 1 is provided between the optical waveguide substrate 1 and the holding substrate.

For example, a glass-based substrate can be used as the holding substrate, and a bonding layer (intermediate layer) of SiO₂ can be provided on the upper surface of the holding substrate through an adhesive layer of Si, so that the optical waveguide substrate 1 can be disposed. In addition, the buffer layer BL is disposed on the upper side of the optical waveguide substrate 1.

In the optical waveguide device of the present invention, the buffer layer BL and the lower layer UL, which sandwich the optical waveguide substrate 1, function as clad layers for the optical waveguide 10, so that a dielectric material with a lower refractive index and higher transparency than the optical waveguide substrate 1 is used. Specifically, oxides or fluorides of metal elements in groups 1 to 17 of the periodic table, such as SiO₂, Al₂O₃, MgF₂, La₂O₃, ZnO, HfO₂, MgO, CaF₂, and Y₂O₃, are used.

A metal such as Au or Cu is used for the electrodes (E1, E2) disposed on the upper side of the optical waveguide substrate 1. In addition, in order to increase the adhesive strength between the electrodes and the optical waveguide substrate or the buffer layer on which the electrodes are disposed, the electrodes may be formed of a multilayer structure of an upper electrode and an underlayer. The upper electrode is formed to cover the underlayer by an electroplating method using the underlayer, an electroless plating method using a resist pattern, a vapor phase method such as vapor deposition or sputtering, or a combination thereof. As a material for the underlayer, Ti, Nb, Ni, Cr, or Al is used, and the underlayer is formed on the upper surface of the optical waveguide substrate by a sputtering method or a vapor deposition method.

The optical waveguide device of the present invention is characterized in that at least one of the two modulation electrodes (E1, E2) is provided with a capacitance adjustment mechanism for adjusting the phase velocity of the modulation signal propagating through the modulation electrode.

As described above, since the structures of the two modulation electrodes (E1, E2), which are lines for transmitting differential modulation signals, are asymmetric, there is a difference in capacitance between the modulation electrodes. Since the phase velocity of the high-frequency signal depends on the capacitance of the line (for example, an approximate solution of the propagation velocity v is represented by v = 1/(LC)^{1/2}, L is the inductance of the line, and C is the capacitance of the line), by partially adjusting the capacitance of the modulation electrode, it is possible to match the phase velocities of the differential modulation signals propagating through the two lines.

When the capacitance of the modulation electrode changes, the characteristic impedance of the line also changes. Therefore, the capacitance adjustment mechanism according to the present invention can also be used for characteristic impedance matching or propagation velocity matching between a light wave and a modulation signal. The characteristic impedance of the modulation electrode (signal electrode) is set to 80 to 120 S2, preferably 90 to 110 Ω, and more preferably 95 to 105 S2.

A specific configuration of the capacitance adjustment mechanism is not particularly limited as long as it is a configuration capable of adjusting the phase velocity of the modulation signal propagating through the electrode, and examples thereof include the following configurations.
(1) A dummy electrode that does not generate an electric field to be applied to the optical waveguide is provided. As the disposition position of the dummy electrode, the dummy electrode is disposed to be connected to at least one of the proximity electrode, the bypass electrode, or the signal electrode.
(2) The electrode width or the electrode thickness of at least a part of the proximity electrode, the bypass electrode, or the signal electrode is changed. However, when the electrode thickness of the proximity electrode to which the electric field is applied in the optical waveguide is changed, the electric field profile also changes. Therefore, for example, when the proximity electrodes (PE11 to PE22) are disposed as shown in FIGS. 5A to 5C, it is preferable to configure such that the electrode thickness is not changed.
(3) In addition, another disposition position of the dummy electrode is between the adjacent modulation electrode and ground electrode, and the dummy electrode may be connected to either electrode.
(4) In addition, the clearance between the modulation electrode and the ground electrode which are adjacent to each other is partially adjusted.

Hereinafter, the above (1) and (2) will be described in detail. Of course, it is also possible to apply the above configurations (1) and (2) in combination. In addition, it goes without saying that a combination of (1) to (4) above can also be used.

Hereinafter, specific examples of the capacitance adjustment mechanism will be described with reference to FIGS. 6 to 19.

FIG. 6 is a plan view showing a first embodiment of an optical waveguide device of the present invention. As the capacitance adjustment mechanism, a dummy electrode is connected to a part of the modulation electrode, more specifically, to the proximity electrode. As shown in FIG. 6, a first dummy electrode DE extending from the proximity electrode PE12 to a side opposite to the bypass electrode BE1 is disposed.

The dummy electrode DE can finely adjust the phase velocity of the modulation signal by adjusting the length α1 in the left-right direction in FIG. 6 and the length α4 protruding downward from the proximity electrode PE12. In addition, the phase velocity can also be changed by adjusting the thickness (width) α2 or α3 of each portion configuring the dummy electrode. Further, the phase velocity can also be adjusted by adjusting the distance α5 or α6 between the dummy electrode DE and the electrode E2 side facing the dummy electrode DE.

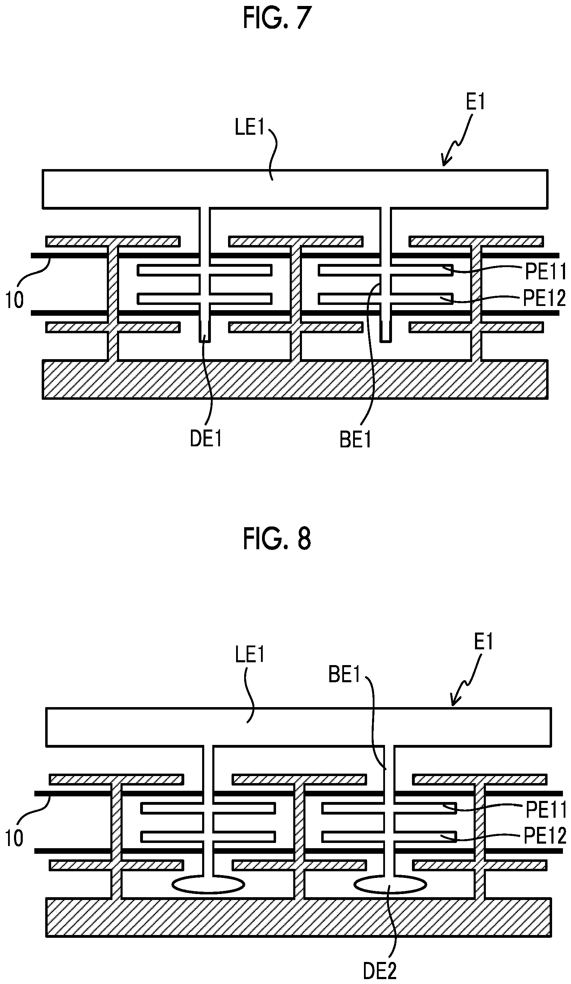

In addition, it goes without saying that the phase velocity can also be changed by changing the thickness of the dummy electrode DE. In addition, the shape of the first dummy electrode connected to the proximity electrode is not limited to the T-shape as shown in FIG. 6, and a dummy electrode (DE1) of an I-shape as shown in FIG. 7 or a dummy electrode (DE2) with curved outer periphery as shown in FIG. 8 may be used.

The electrode width α2 in a case in which the dummy electrode DE of FIG. 6 crosses the lower optical waveguide 10 is important. This is because, in a configuration in which the electrode crosses the optical waveguide, the optical loss of the light wave propagating through the optical waveguide increases. Therefore, in order to set the optical loss due to the electrodes to be the same in the upper and lower optical waveguides 10, it is preferable that the electrode width α2 is set to be the same as the width of the bypass electrode BE1. This can also be said with respect to FIGS. 7 and 8.

By forming an electrode surrounded by curved lines like the dummy electrode DE2 in FIG. 8, no corner portions are formed around the electrode, and no areas in which the electric field is concentrated are generated. Therefore, the dummy electrode is prevented from affecting the electric field on the nearby optical waveguide, and this shape can be said to be more preferable for the dummy electrode.

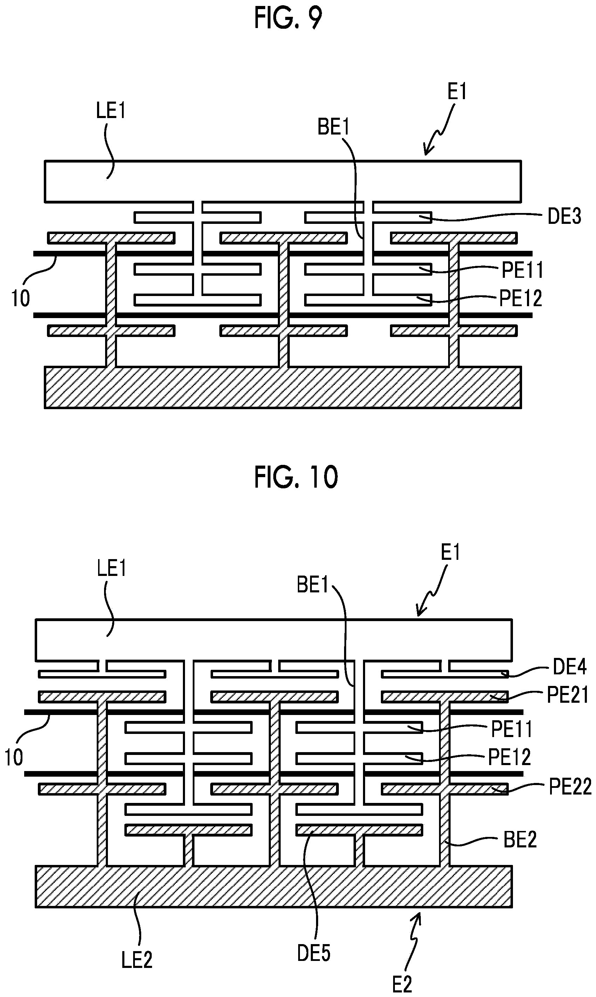

FIG. 9 shows a second dummy electrode DE3 connected to the bias electrode BE1.

FIG. 10 shows a third dummy electrode DE4 (or DE5) connected to the signal electrode LE1 (or LE2). In this manner, a dummy electrode can be connected to any portion of the electrodes constituting electrode E1 or E2 to function as a capacitance adjustment mechanism. In addition to the configuration in which the capacitance adjustment mechanism, such as the dummy electrode, is provided only on one electrode (E1 or E2), a configuration is possible in which the capacitance adjustment mechanism is disposed on both of the two modulation electrodes (E1 and E2) as shown in FIG. 10 such that the phase velocity is the same for the entire two modulation electrodes.

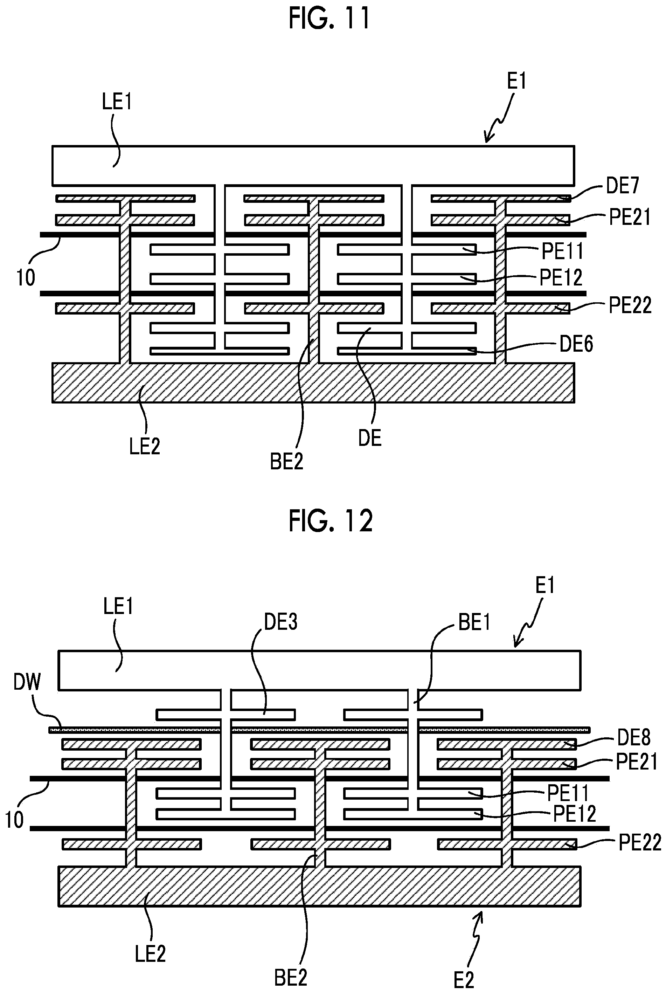

In addition, as shown in FIG. 11, it is also possible to add dummy electrodes DE6 and DE7 such that the shape of the electrodes, when viewed as a whole, achieves higher symmetry between the two modulation electrodes. By improving the symmetry of the shapes of the two modulation electrodes, the distribution of internal stress that the electrodes exert on the optical waveguide substrate due to thermal expansion or the like becomes uniform, which also contributes to suppressing the occurrence of the temperature drift phenomenon.

In addition, as shown in FIG. 12, it is also possible to dispose a dummy optical waveguide DW that is adjacent to the optical waveguide (branched waveguide) 10 and does not propagate the light wave, in addition to the optical waveguide (branched waveguide) 10 that propagates the light wave. The presence of this dummy optical waveguide DW makes the magnitude of the surrounding dielectric constant sensed by the dummy electrode DE3 equal to the magnitude of the surrounding dielectric constant sensed by the proximity electrode PE22, thereby making the phase velocities more similar. Of course, it is also possible to eliminate the bias in the internal stress that the electrodes exert on the optical waveguide.

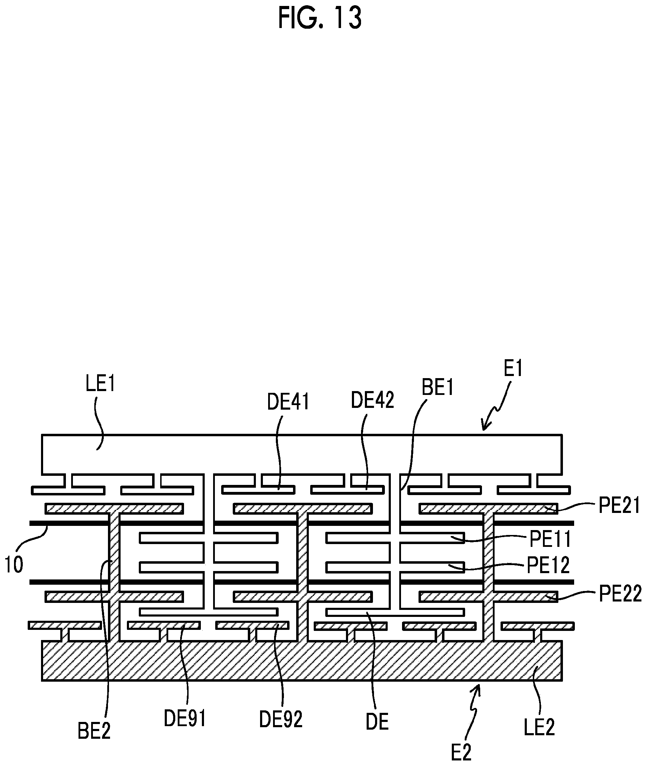

As shown in FIG. 13, a plurality of dummy electrodes (fine electrodes) DE41 and DE42 (or DE91 and DE92) can also be disposed between the adjacent bypass electrodes BE1 (or BE2). Such a plurality of fine electrodes can suppress the modulation electrode from generating a resonance phenomenon.

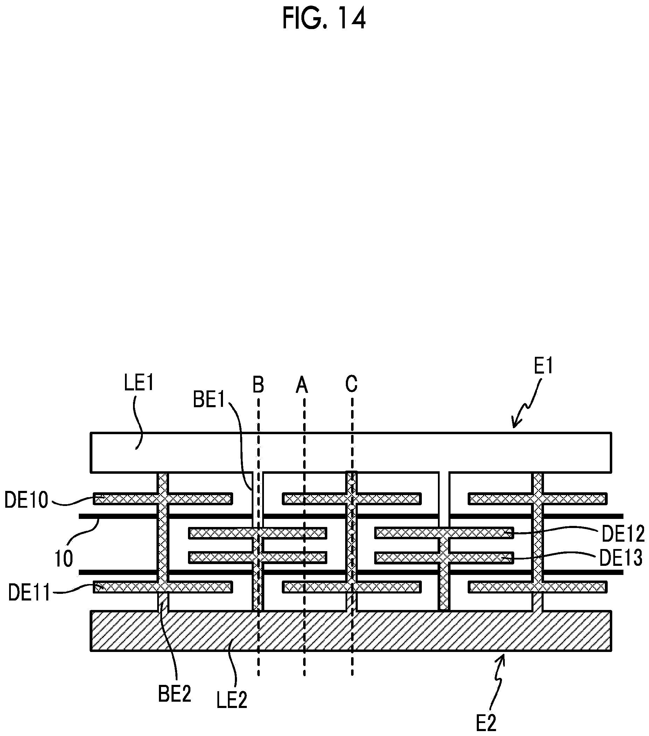

Another example of the capacitance adjustment mechanism will be described with reference to FIGS. 14 to 17.

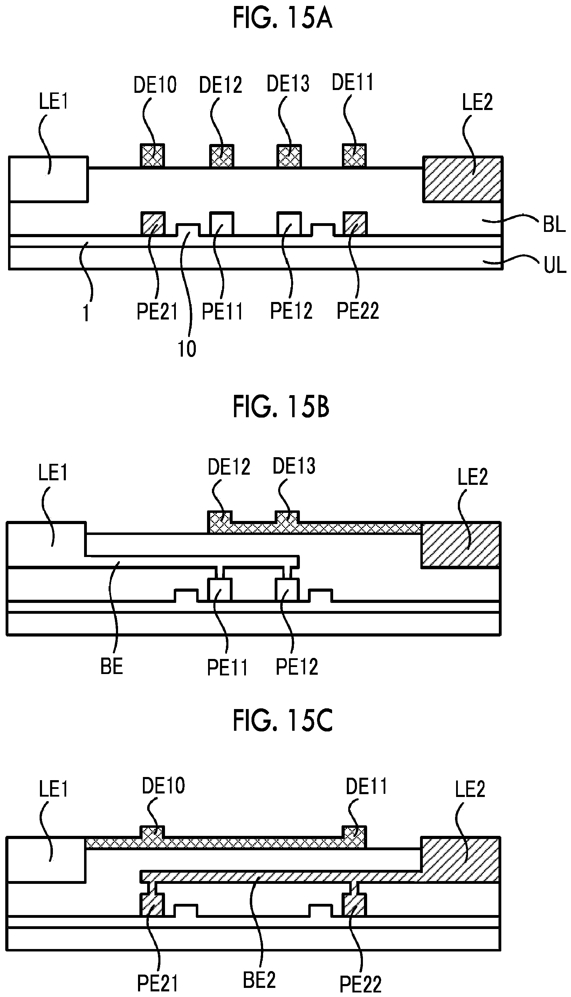

In FIGS. 14 to 15C, the segment electrodes disposed to be superimposed in the vertical direction to ensure that the shapes of the segment electrodes formed on the two modulation electrodes are exactly the same. FIG. 14 is a plan view, and FIGS. 15A to C show cross-sectional views taken along dotted lines A to C in FIG. 14. Focusing on the portion of the dotted line A, the dummy electrodes (DE10, DE11, DE12, DE13) are disposed on the upper side corresponding to the proximity electrodes (P21, PE11, PE12, PE22). In addition, focusing on the portion of the dotted line B, the shapes of the segment electrodes including the proximity electrodes (PE11 and PE12) and the shapes of the segment electrodes including the dummy electrodes (DE12 and DE13) are exactly the same (symmetrical).

In this way, by making the shapes of the segment electrodes of the respective modulation electrodes the same, it is possible to make the phase velocities of the respective modulation electrodes the same.

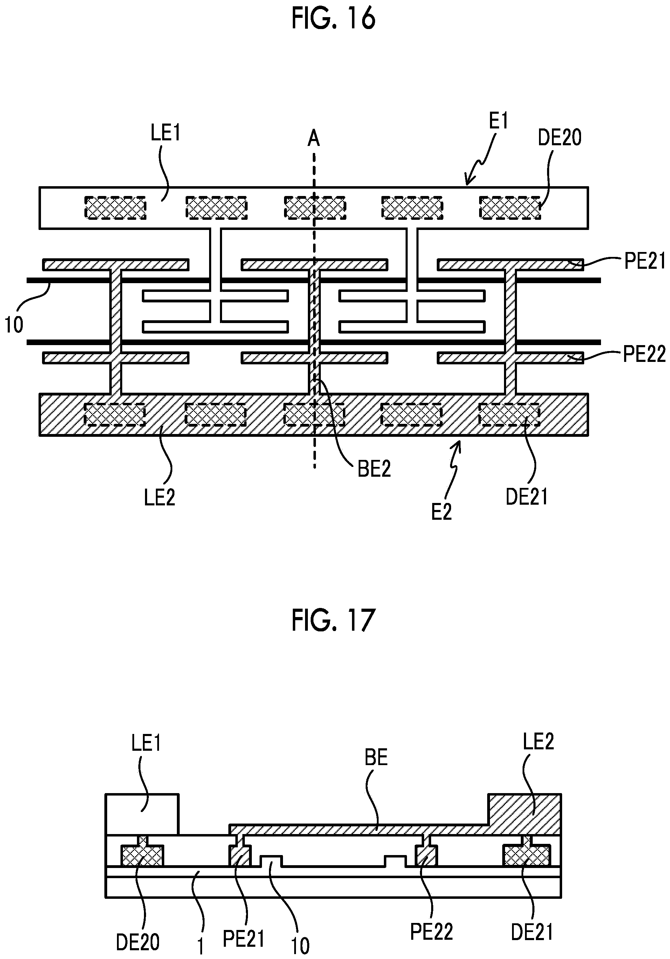

FIGS. 16 and 17 show a case in which dummy electrodes DE20 (DE21) are connected to the lower side of the signal electrode LE1 (LE2). In this way, the dummy electrode can also be disposed in a three-dimensional position. Of course, the dummy electrode may be disposed above and below the bypass electrode, or in some cases, the proximity electrode, in addition to the signal electrode.

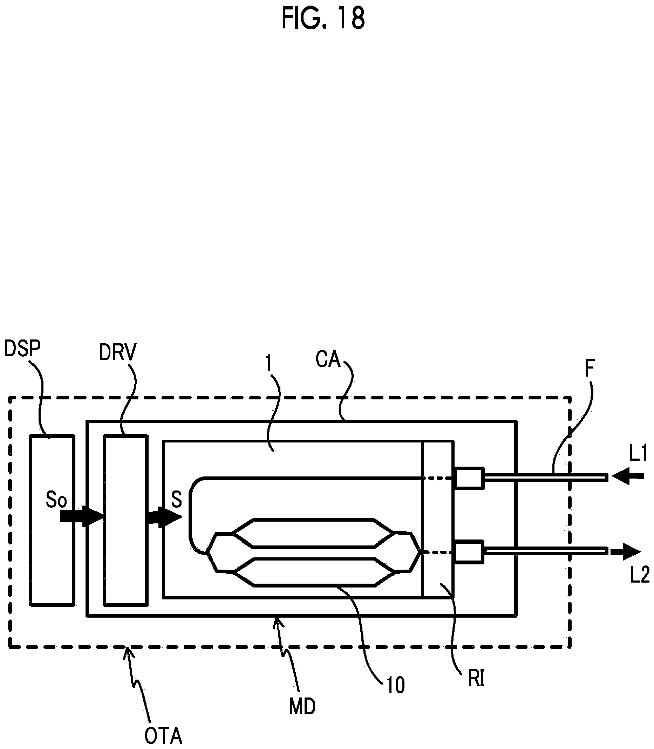

FIG. 18 is a diagram illustrating an example of an optical transmission apparatus. In recent years, an optical modulation device such as a high bandwidth-coherent driver modulator (HB-CDM) in which a driver IC and the optical waveguide device and the like are integrated in the same case has drawn attention, and there has been an increasing need for a configuration suitable for size reduction and the like, such as the optical waveguide device of the present invention.

In an optical modulation device of the present invention, the optical waveguide device is disposed inside a case CA of metal or the like. In the optical waveguide device inside the case, the input light L1 is input into an optical waveguide 10 formed on the optical waveguide device through an optical fiber FB or other optical components such as a lens. Meanwhile, the light wave output from the optical waveguide device is input into another optical fiber F and results in the output light L2. In outputting light, an optical component such as polarization combining means or a lens is used, as necessary. A modulation electrode, not illustrated, is formed on the substrate 1 of the optical waveguide device. In addition, a reinforcing member RI for increasing mechanical strength is disposed on the substrate in input and output portions of the optical waveguide device, as necessary.

In the optical modulation device, a driver circuit element DRV that generates an electrical signal S to be applied to the modulation electrode of the optical waveguide device is disposed adjacent to the optical waveguide device, and the optical waveguide device and the driver circuit element DRV are accommodated inside the same case CA.

Furthermore, an optical transmission apparatus can also be configured by providing a signal generator DSP (digital signal processing device) that generates a modulation signal So to be input into the driver circuit element DRV. The case CA and the signal generator DSP can also be incorporated in one chassis.

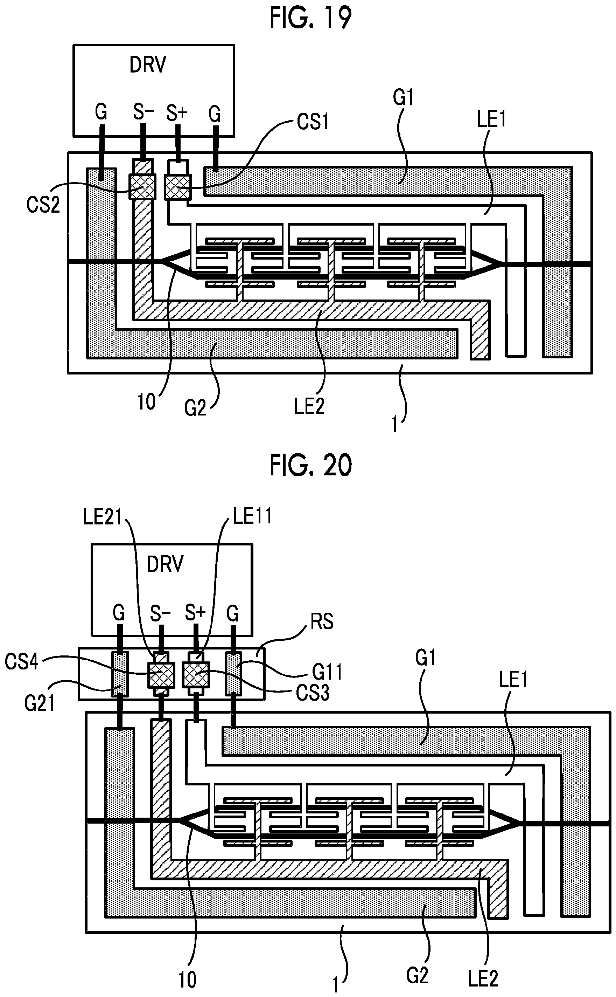

In addition, as shown in FIGS. 19 and 20, a capacitor may be provided on a part of the signal electrode of the modulation electrode or in a part of the signal line for supplying the modulation signal of the modulation electrode to block a DC component included in the modulation signal. In FIG. 19, the capacitor CS1 (CS2) is disposed on the input side of the modulation signal (differential modulation signal S+, S-) of the signal electrode LE1 (LE2). In addition, in FIG. 20, capacitors (CS3, CS4) are disposed in the signal lines (LE11, LE21) provided on the relay substrate RS to supply the modulation signal to the signal electrode. Reference symbols G1 1 and G21 denote lines for the ground electrodes provided on the relay substrate.

As described above, according to the present invention, it is possible to provide an optical waveguide device in which the phase shift of a differential modulation signal propagating through an electrode is suppressed. Furthermore, it is possible to provide an optical modulation device and an optical transmission apparatus using the optical waveguide device.

## Claims

1. An optical waveguide device in which an optical waveguide including at least one Mach-Zehnder type optical waveguide is formed on a substrate, and
two branched waveguides configuring the Mach-Zehnder type optical waveguide are each provided with two modulation electrodes for applying a differential modulation signal, wherein
each of the modulation electrodes includes a plurality of proximity electrodes disposed in a divided manner along the branched waveguide, a signal electrode for propagating the modulation signal, and a bypass electrode connecting the proximity electrodes and the signal electrode, and
a capacitance adjustment mechanism for adjusting a phase velocity of the modulation signal propagating through the modulation electrode is provided on at least one of the two modulation electrodes.

2. The optical waveguide device according to claim 1, wherein
the capacitance adjustment mechanism is a dummy electrode that is formed on a part of the modulation electrode and does not generate an electric field to be applied to the branched waveguide.

3. The optical waveguide device according to claim 2, wherein
the dummy electrode is a first dummy electrode that extends from the proximity electrode to a side opposite to the bypass electrode.

4. The optical waveguide device according to claim 2, wherein
the dummy electrode is a second dummy electrode that extends from the bypass electrode.

5. The optical waveguide device according to claim 2, wherein
the dummy electrode is a third dummy electrode that extends from the signal electrode.

6. The optical waveguide device according to claim 5, wherein
the third dummy electrode includes a plurality of fine electrodes disposed between the adjacent bypass electrodes.

7. The optical waveguide device according to claim 1, wherein
the capacitance adjustment mechanism is to change an electrode width of at least a part of the proximity electrode, the bypass electrode, or the signal electrode.

8. The optical waveguide device according to claim 1, wherein
the capacitance adjustment mechanism is to change an electrode thickness of at least a part of the bypass electrode or the signal electrode.

9. The optical waveguide device according to claim 1, wherein
a buffer layer is formed on the substrate, the proximity electrode is disposed between the substrate and the buffer layer, and a part of the signal electrode and the bypass electrode is disposed on the buffer layer.

10. The optical waveguide device according to claim 1, wherein
a dummy optical waveguide that does not propagate a light wave is disposed adjacent to the branched waveguide.

11. The optical waveguide device according to claim 1, wherein
a capacitor that blocks a DC component of the modulation signal is formed in a part of the modulation electrode or in a part of a signal line electrically connected to the modulation electrode.

12. An optical modulation device comprising:
the optical waveguide device according to claim 1 being accommodated in a case; and
an optical fiber through which a light wave is input into the optical waveguide or output from the optical waveguide.

13. The optical modulation device according to claim 12, wherein
the optical waveguide device includes a modulation electrode for modulating the light wave propagating through the optical waveguide, and
an electronic circuit that amplifies a modulation signal to be input to the modulation electrode of the optical waveguide device is provided inside the case.

14. An optical transmission apparatus comprising:
the optical modulation device according to claim 12; and
an electronic circuit that outputs a modulation signal causing the optical modulation device to perform a modulation operation.
